# EUROPEAN PATENT APPLICATION

(11) **EP 1 820 985 A1**
(43) Date of publication of application: **22.08.2007**
(21) Application number: 05807056.6
(22) Date of filing: 17.11.2005
(51) Int. Cl.: F16C 33/76, B60B 35/02, F16C 19/18

(54) **BEARING DEVICE FOR WHEEL**

(30) Priority: 18.11.2004 JP 2004333938
(71) Applicant: JTEKT Corporation, Osaka-shi Osaka 542-8502 (JP)
(72) Inventor: HAKATA, Toshihiro c/o JTEKT Corporation, Osaka 542-8502 (JP); KEVORKIAN, Vasken c/o JTEKT Corporation, Osaka 542-8502 (JP); JELLEMA, Martin Percival c/o JTEKT Corporation, Osaka 542-8502 (JP)
(74) Representative: Sajda, Wolf E.
(86) International application number: PCT/JP2005/021120
(87) International publication number: WO 2006/054640

(57) **Abstract**

Object

A bearing assembly is provided which is capable of assuredly preventing the invasion of water into the assembly, thereby to maintain its performance over an extended period of time.

Means for solution

A vehicular-wheel bearing assembly includes: an inner ring member (5); an outer ring member (3) disposed on an outer periphery of the inner ring member (5) via a rolling element (6); and a synthetic-resin cover (15) in fitting engagement with one axial end of the inner ring member (5) or the outer ring member (3). The cover (15) has a metal ring (17) at least partially embedded in a portion of the cover, the portion making fitting engagement with the one axial end of the inner ring member (5) or the outer ring member (3).

## Description

### Technical Field

The present invention relates to a vehicular-wheel bearing assembly (hereinafter, simply referred to as bearing assembly as well). More particularly, the invention relates to a bearing assembly wherein a synthetic-resin cover is fitted with one axial end of an inner ring member or an outer ring member constituting the bearing assembly.

### Background Art

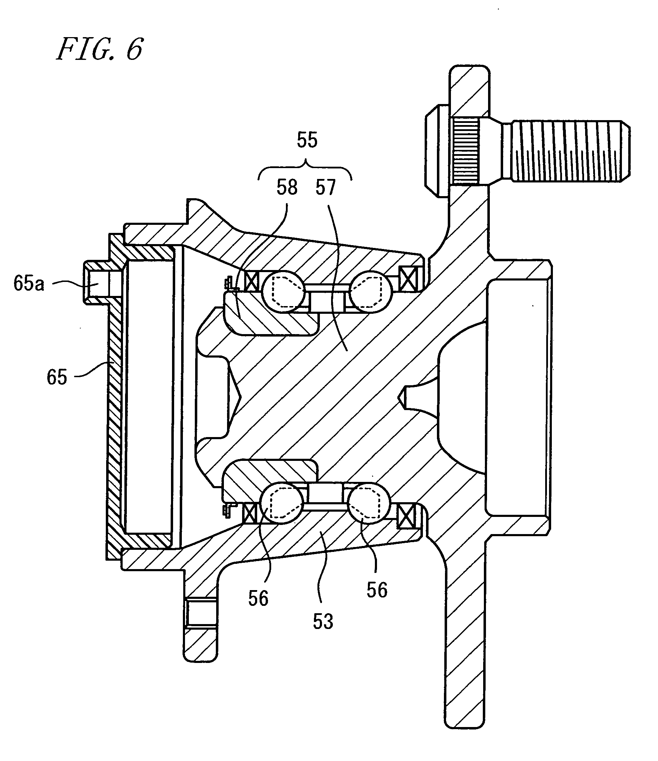

Conventionally, a rolling bearing assembly has been widely used for rotatably carrying a wheel under a body of an automotive vehicle. As shown in FIG. 6, such a bearing assembly generally includes: an outer ring member 53 fixed to the vehicle body and possessing a plurality of raceway surfaces formed on an inner periphery thereof; an inner ring member 55 disposed radially inwardly of the outer ring member 53 in a coaxial relation therewith and possessing a plurality of raceway surfaces on an outer periphery thereof so as to be free to rotate; and a plurality of rows of rolling elements 56 rollably interposed between the raceway surfaces of the outer ring member 53 and the inner ring member 55.
The inner ring member 55 includes: a hub spindle 57; and an inner-ring component member 58 independent from the hub spindle 57 and fitted on a vehicular-inner end of the hub spindle 57. In some cases, a cover 65 may be fitted with a vehicular-inner end of the outer ring member 53 in order to prevent muddy water and the like from entering a radially inward area of the outer ring member through a vehicular-inner opening thereof. A sensor (not shown) for detecting the number of revolutions of the wheel is normally mounted in a mounting hole 65a of the cover 65 in a case where the control of an antilock brake system or a traction control system is provided.

Such a cover 65 has conventionally been formed from a metal material by die casting. More recently, however, it has become a common practice to form the cover 65 from a synthetic-resin material in order to achieve weight reduction and cost reduction (see, for example, Japanese Unexamined Patent Publication No.2004-44664).

### Disclosure of the Invention

### Problems to Be Solved by the Invention

At normal temperatures, the above synthetic-resin cover 65 is tightly fitted in the inner periphery of the outer ring member 53. However, the material (metal) forming the outer ring member 53 and the synthetic resin material forming the cover 65 have different coefficients of thermal expansion. Under high temperature conditions, therefore, a difference occurs between expansion quantities of the outer ring member 53 and the cover 65, so that a clearance may be formed between contact surfaces (fitting-engagement surfaces) of these components. This clearance detrimentally allows the invasion of water into the bearing assembly, resulting in troubles such as the corrosion of the components of the bearing assembly. Accordingly, the bearing assembly is lowered in performance and decreased in service life.

The invention is directed to the solution to such problems of the conventional bearing assemblies and has an object to provide a bearing assembly capable of reliably preventing the invasion of water into the assembly, thereby maintaining its performance over an extended period of time.

### Means for Solving the Problems

A vehicular-wheel bearing assembly according to the invention comprises:
an inner ring member; an outer ring member disposed on an outer periphery of the inner ring member via a rolling element; and a synthetic-resin cover in fitting engagement with one axial end of the inner ring member or the outer ring member,
wherein the cover has a metal ring at least partially embedded in a portion of the cover, the portion making fitting engagement with the one axial end of the inner ring member or the outer ring member.

According to the bearing assembly of the invention, the cover has the metal ring embedded in a portion of the cover making fitting engagement with the inner ring member or the outer ring member. Although the metal ring is elongated under high temperature conditions, the metal ring is affixed to its surrounding area (cover) so firmly that the metal ring and the cover are practically integrated. With the elongation of the metal ring, therefore, the cover is also elongated substantially in the same degree as the coefficient of thermal expansion of the metal ring.
Since the coefficient of thermal expansion of the metal ring is of a value close to that of the outer ring member, the elongation of the outer ring member is substantially equal to that of the cover. Accordingly, the formation of the clearance between these components is obviated. Even when used under the high temperature conditions, the bearing assembly can maintain its performance over an extended period of time because the bearing assembly is prevented from suffering the troubles such as the corrosion of its components caused by the water invaded into the bearing assembly.

It is preferred that the cover is fitted in an inner periphery of the one axial end of the inner ring member or the outer ring member, that the ring is partially projected from an opening end of the cover and is bent at a distal end thereof to define a hook, and that a recess allowing the hook to be locked therein is formed in the inner periphery of the one axial end of the inner ring member of the outer ring member. The bearing assembly cannot attain a great fitting engaging force between the synthetic resin (cover) and the metal (inner ring member or outer ring member) and hence, the cover is also unable to resist a great drawing force.
However, the metal ring is formed with the hook at its distal end and the hook is locked in the recess formed in the inner periphery of the inner ring member or the outer ring member, whereby the cover is able to resist the great drawing force. As a result, the cover may be prevented from easily disengaging from the inner ring member or the outer ring member.

A vehicular-wheel bearing assembly according to another aspect of the invention comprises: an inner ring member; an outer ring member disposed on an outer periphery of the inner ring member via a rolling element; and a synthetic-resin cover fitted on an outer periphery of one axial end of the inner ring member or the outer ring member,
wherein an opening end of the cover is formed with a tapered surface progressively decreased in diameter toward a tip of the cover, and wherein a tapered surface capable of making tight contact with the tapered surface of the cover is formed on the outer periphery of the one axial end, on which the cover is fitted, of the inner ring member or the outer ring member.

The following advantage is offered by the constitution wherein the tapered surface at the opening end of the cover (the opening end means an end on an opening side of the cover normally having a short closed-end cylinder shape) is in tight contact with the tapered surface on the outer periphery of the inner ring member or the outer ring member. That is, when the cover is expanded under the high temperature conditions, the tapered surface of the cover presses against the tapered surface of the inner ring member or the outer ring member, so that the clearance is not formed between the cover and the inner ring member or the outer ring member.
Therefore, the invasion of water into the bearing assembly may be avoided. On the other hand, the cover shrinks under low temperature conditions. In this case, an inner periphery of a cylinder portion of the cover fitted on the inner ring member or the outer ring member (surface in contact with the outer periphery of the inner ring member or the outer ring member) presses against the outer periphery of the inner ring member or the outer ring member. Therefore, the clearance is not formed between these components, so that the invasion of water into the bearing assembly may be avoided.

It is preferred that an inside projection fitted in an inner periphery of the one axial end of the inner ring member or the outer ring member is extended from the cover at place radially inwardly of a portion of the cover fitted on the outer periphery of the one axial end of the inner ring member or the outer ring member, and that the inner periphery of the one axial end of the inner ring member or the outer ring member is formed with a recess allowing a hook to be locked therein, the hook being formed at a distal end of the inside projection. As described above, the bearing assembly cannot attain the great fitting engaging force between the synthetic resin (cover) and the metal (inner ring member or outer ring member) and hence, the cover is also unable to resist the great drawing force.
However, the inside projection fitted in the inner periphery of the inner ring member or the outer ring member is formed at the cover and the hook formed at the distal end of the inside projection is locked in the recess formed in the inner periphery of the inner ring member or the outer ring member, whereby the cover is able to resist the great drawing force. As a result, the cover may be prevented from easily disengaging from the inner ring member or the outer ring member.

A vehicular-wheel bearing assembly according to still another aspect of the invention comprises: an inner ring member; an outer ring member disposed on an outer periphery of the inner ring member via a rolling element; and a synthetic-resin cover fitted in an inner periphery of one axial end of the inner ring member or the outer ring member,
wherein the cover has a metal ring affixed to an outer periphery of a portion of the cover fitted in the inner periphery of the one axial end of the inner ring member or the outer ring member, and wherein a buffer layer formed from a rubber material is interposed between the metal ring and the cover.

A vehicular-wheel bearing assembly according to yet another aspect of the invention comprises: an inner ring member; an outer ring member disposed on an outer periphery of the inner ring member via a rolling element; and a synthetic-resin cover fitted on an outer periphery of one axial end of the inner ring member or the outer ring member,
wherein the cover has a metal ring affixed to an inner periphery of a portion of the cover fitted on the one axial end of the inner ring member or the outer ring member, and wherein a buffer layer formed from a rubber material is interposed between the metal ring and the cover.

The bearing assembly cannot attain the great fitting engaging force between the synthetic resin (cover) and the metal (inner ring member or outer ring member) and hence, the cover is also unable to resist the great drawing force. As a compensation for this drawback, it may be contemplated to use an adhesive to affix the metal ring to the outer periphery or the inner periphery (the side in contact with the inner ring member or the outer ring member) of the cover portion in fitting engagement with the inner ring member or the outer ring member.
In this case, if the bearing assembly is cycled between the high temperatures and the low temperatures, a binding strength based on the adhesive is decreased due to the different coefficients of thermal expansion of the cover (synthetic resin) and the metal ring, so that the clearance is formed between these components. This clearance may detrimentally allow the invasion of water into the bearing assembly. However, the formation of the clearance may be avoided by interposing the buffer layer of the rubber material between the metal ring and the cover.
That is, the rubber material, which is more flexible than the synthetic resin, is able to accommodate an elongation difference between the metal ring and the cover (resulting from the difference in the coefficient of thermal expansion between these components). Thus is prevented the formation of the clearance between the metal ring and the cover.

### Brief Description of the Drawings

FIG. 1 is a sectional view illustrating a bearing assembly according to one embodiment of the invention;
FIG. 2 is a fragmentary sectional view illustrating a bearing assembly according to another embodiment of the invention;
FIG. 3 is a fragmentary sectional view illustrating a bearing assembly according to still another embodiment of the invention;
FIG. 4 is a fragmentary sectional view illustrating a modification of the bearing assembly shown in FIG. 3;
FIG. 5 is a fragmentary sectional view illustrating a bearing assembly according to yet another embodiment of the invention; and
FIG. 6 is a sectional view illustrating a conventional bearing assembly.

### Best Modes for Carrying Out the Invention

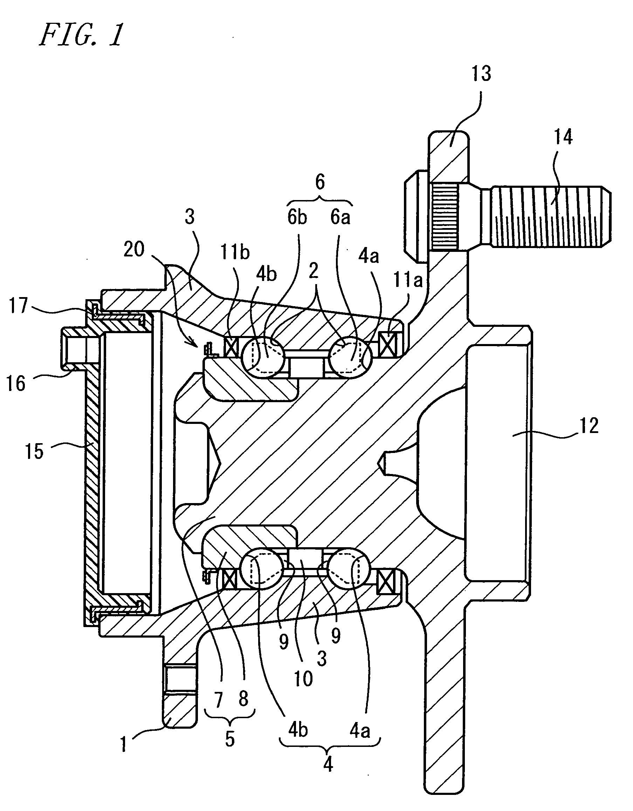

A bearing assembly according to an embodiment of the invention will be described hereinafter in details with reference to the accompanying drawings. FIG. 1 shows a bearing assembly according to one embodiment of the invention. The bearing assembly is a vehicular-wheel bearing assembly for use in a driven wheel of a vehicle. The bearing assembly includes: an outer ring member 3 fixed to a vehicle body by means of a vehicle-side mounting flange 1 and possessing a plurality of outer raceway surfaces 2 formed on an inner periphery thereof; an inner ring member 5 disposed radially inwardly of the outer ring member 3 in a coaxial relation therewith and possessing a plurality of inner raceway surfaces 4 on an outer periphery thereof; and a plurality of rows of balls 6 as rolling elements rollably interposed between the respective raceway surfaces 2, 4 of the outer ring member 3 and the inner ring member 5. The inner ring member 5 includes: a hub spindle 7; and an inner-ring component member 8 which is independent from the hub spindle 7 and fitted on an outer periphery of a vehicular-inner end of the hub spindle 7 (the left-hand side as seen in FIG. 1). The hub spindle 7 is rotatably supported by the outer ring member 3 via the plurality of rows of balls 6.

Out of the plurality of rows of balls 6, one ball row 6a is arranged on an inner-ring raceway surface 4a formed on an outer periphery of a vehicular-outer side of the hub spindle 7, whereas the other ball row 6b is arranged on an inner-ring raceway surface 4b formed on an outer periphery of the inner-ring component member 8. The balls of the individual ball rows 6a, 6b are retained by a cage 9 as arranged at equal space intervals in the circumferential direction. Seal portions 11a, 11b are interposed between the inner periphery of the outer ring member 3 and the outer periphery of the inner ring member 5 including the hub spindle 7 and the inner-ring component member 8, so as to seal a bearing space 10 between the outer and inner ring members on the vehicular outer side and the vehicular inner side.

A mounting recess 12 fixed with a wheel is formed at a vehicular-outer end of the hub spindle 7. Furthermore, a hub flange 13 extended radially outwardly is formed on an outer periphery of a vehicular-outer end of the hub spindle 7. A brake disk rotor and the wheel (not shown) are mounted to the hub flange 13 by means of hub bolts 14 press-inserted in the hub flange 13.

A cover 15 having a short closed-end cylinder shape is fitted in an inner periphery of a vehicular-inner end of the outer ring member 3. The cover 15 is formed with a sensor mounting portion 16 for mounting a sensor (not shown) for detecting the rotational speed of the wheel. The sensor detects a magnetic member of a pulser ring 20 thereby detecting the rotational speed of the road wheel. The pulser ring 20 is disposed on an outer periphery of a vehicular-inner end of the inner-ring component member 8 so as to be rotated along with the inner-ring component member 8.

In this embodiment, the cover 15 has a metal ring 17 completely buried in a portion of the cover fitted in the inner periphery of the outer ring member 3. The metal ring 17 is shaped like a short cylinder and is formed of a rolled steel plate such as SPCC. For increasing adhesion to a synthetic resin, such as reinforced nylon, forming the cover 15, the metal ring 17 is bent at its axial opposite ends, one of which is bent outwardly and the other of which is bent inwardly. Although the metal ring 17 is elongated when the bearing assembly is used under high temperature conditions, the metal ring 17 is affixed to its surrounding portion (the cover) so firmly that the metal ring and the surrounding portion are practically integrated.
With the elongation of the metal ring 17, therefore, the cover 15 is also elongated substantially in the same degree as the coefficient of thermal expansion of the metal ring 17. Since the coefficient of thermal expansion of the metal ring 17 is of a value close to that of the outer ring member 3, the elongation of the outer ring member 3 is substantially equal to that of the cover 15.
Accordingly, the problem that the outer ring member and the cover are separated from each other to form a clearance therebetween is obviated. When used under high temperature conditions, the bearing assembly can maintain its performance over an extended period of time because the bearing assembly is prevented from suffering the troubles such as the corrosion of its components caused by the water invaded into the bearing assembly.

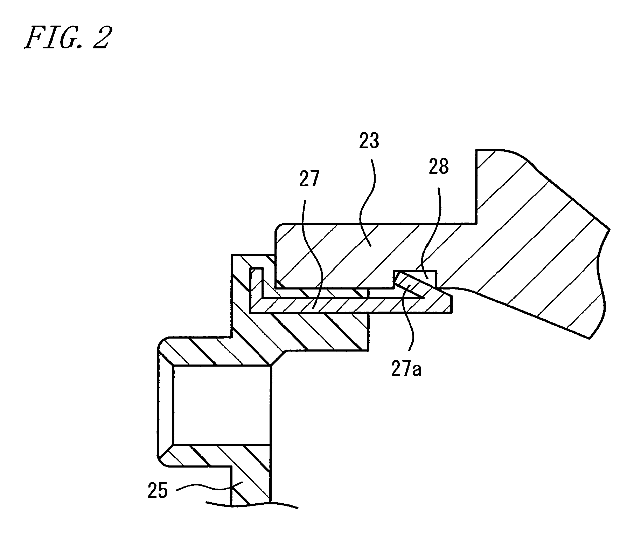

FIG. 2 shows in section a part of a bearing assembly according to another embodiment of the invention. In this embodiment, a metal ring 27 is partially embedded in a cover 25. The rest of the metal ring 27 projects from an opening end of the cover 25 and has a bent tip which defines a hook 27a. On the other hand, an annular groove 28 as a recess allowing the hook 27a to be locked therein is formed in an inner periphery of the outer ring member 23, in which the cover 25 is fitted. A distal end of the hook 27a is bent so as to be directed to the vehicular-inner side (the left-hand side as seen in FIG. 2).
When the cover 25 is fitted in the outer ring member 23, the hook is slid on the inner periphery of the outer ring member 23 as elastically flexed a little radially inwardly. When the distal end of the hook 27a reaches the annular groove 28, the hook 27a is restored to its original shape and is locked in the groove 28. The bearing assembly cannot attain a great fitting engaging force between the synthetic resin (cover) and the metal (outer ring member) and hence, the cover is also unable to resist a great drawing force.
However, the metal ring 27 is formed with the hook 27a at its distal end and the hook 27a is locked in the annular groove 28 formed in the inner periphery of the outer ring member 23, whereby the cover 25 is able to resist the great drawing force. Accordingly, the cover 25 is prevented from easily disengaging from the outer ring member 23. An alternative constitution may also be made such that the hook 27a does not project from the overall circumference of the opening end of the cover but projects from circumferential portions of the opening end of the cover. In this case, the above annular groove 28 may be replaced by recesses or grooves formed in correspondence to the projecting portions of the hook 27a.

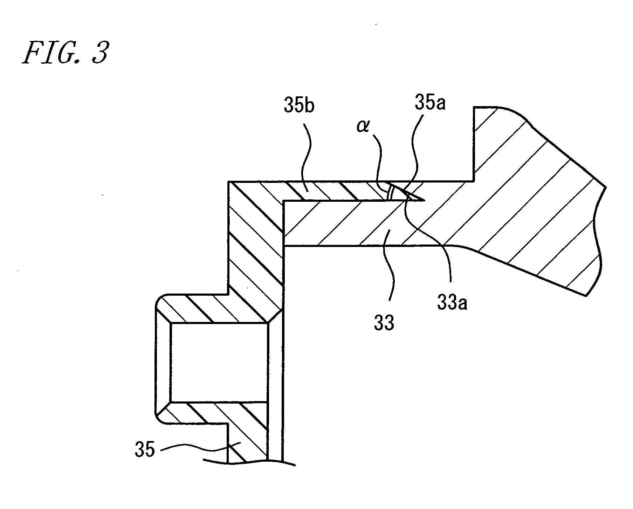

FIG. 3 shows in section a part of a bearing assembly according to still another embodiment of the invention. In this embodiment, an opening end of a cover 35 is formed with a tapered surface 35a progressively decreased in diameter (decreased in outside diameter) toward its tip. Furthermore, a tapered surface 33a adapted for tight contact with the above tapered surface 35a is formed on an outer periphery of one axial end of an outer ring member 33, in which the cover 35 is fitted. The angle α of the tapered surface 35a is not particularly limited in the invention. The following advantage may be obtained if the tapered surface 35a of the opening end of the cover 35 is in contact with the tapered surface 33a on the outer periphery of the outer ring member 33.
When the cover 35 is expanded under the high temperature conditions, the tapered surface 35a of the cover 35 presses against the tapered surface 33a of the outer ring member 33, so that these tapered surfaces are brought into tight contact with each other. Thus is obviated the formation of the clearance between the cover 35 and the outer ring member 33 and hence, the invasion of water into the bearing assembly may be avoided.
On the other hand, the cover 35 shrinks under low temperature conditions. In this case, an inner periphery of a cylinder portion 35b defining a distal end of the cover (surface in contact with the outer periphery of the outer ring member 33) presses against the outer periphery of the outer ring member 33 and hence, the cover and the outer ring member are in tight contact with each other. Therefore, the formation of the clearance between the cover 35 and the outer ring member 33 is also obviated under the low temperature conditions. Thus, the invasion of water into the bearing assembly is avoided.

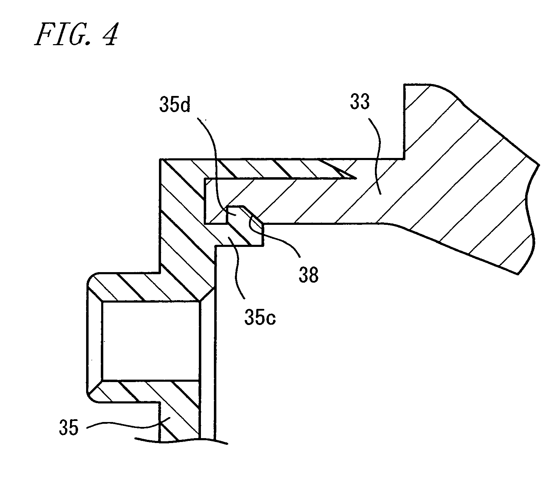

FIG. 4 shows in section a part of another mode of the bearing assembly shown in FIG. 3. In this embodiment, the cover 35 is formed with a hook 35d such that the cover 35 may be increased in resistance against the drawing force. The cover 35 has its hook 35d locked in a groove 38 formed in the inner periphery of the outer ring member 33. More specifically, the cover 35 is formed with an inside annular projection 35c at place radially inwardly of a portion of the cover fitted on the outer periphery of one axial end of the outer ring member 33.
The inside annular projection 35c is fitted in the inner periphery of the one axial end of the outer ring member 33. On the other hand, the inner periphery of the outer ring member 33 is formed with an annular groove 38 allowing the hook 35d at a distal end of the inside projection 35c to be locked therein. As described above, the bearing assembly cannot attain the great fitting engaging force between the synthetic resin (cover) and the metal (outer ring member) and hence, the cover is also unable to resist the great drawing force.
However, the cover 35 is formed with the inside projection 35c fitted in the inner periphery of the outer ring member and the hook 35d at the distal end of the inside projection 35c is locked in the annular groove 38 formed in the inner periphery of the outer ring member 33, whereby the cover is able to resist the great drawing force. Accordingly, the cover 35 is prevented from easily disengaging from the outer ring member 33. An alternative constitution may also be made such that the inside projection 35c does not project from the overall circumference of the cover 35 but projects from circumferential portions of the cover 35. In this case, the above annular groove 38 may be replaced by recesses or grooves formed in correspondence to the projecting portions of the hook 35d.

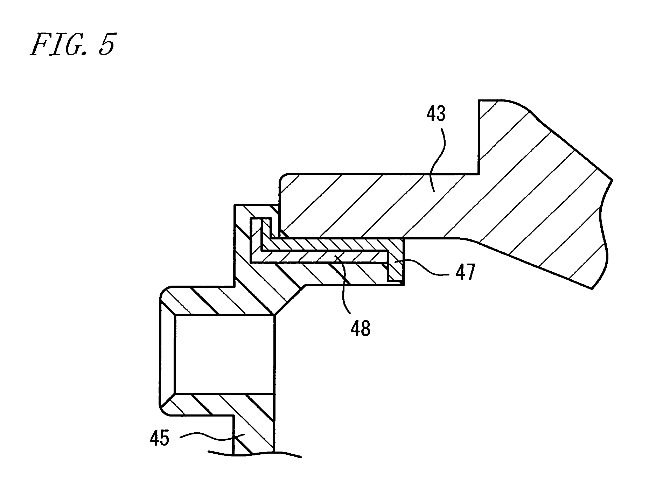

FIG. 5 shows in section a part of a bearing assembly according to yet another embodiment of the invention. In this embodiment, a cover 45 has a metal ring 47 affixed to an outer periphery of a portion of the cover fitted in an inner periphery of one axial end of an outer ring member 43. A buffer layer 48 formed from a rubber material is interposed between the metal ring 47 and the cover 45. The bearing assembly cannot attain the great fitting engaging force between the synthetic resin (cover) and the metal (outer ring member) and hence, the cover is also unable to resist the great drawing force.
In order to compensate for this drawback, the metal ring 47 is adhesively bonded to the outer periphery of the cover portion fitted in the inner periphery of the outer ring member. In this case, if the bearing assembly is cycled between the high temperatures and the low temperatures, a binding strength based on the adhesive is decreased due to the different coefficients of thermal expansion of the cover (synthetic resin) and the metal ring, so that a clearance is formed between the metal ring and the cover. This clearance may detrimentally allow the invasion of water into the bearing assembly.
According to the embodiment, however, the formation of the clearance may be prevented by interposing the buffer layer 48 of the rubber material between the metal ring 47 and the cover 45. That is, the rubber material, which is more flexible than the synthetic resin, is able to accommodate an elongation difference between the metal ring 47 and the cover 45 (resulting from the difference in the coefficient of thermal expansion between these components). Thus is obviated the formation of the clearance between the metal ring 47 and the cover 45.

While the buffer layer 48 may be formed from any rubber material such as acrylonitrile-butadiene rubber (NBR), it is preferred to form the buffer layer from NBR because NBR withstands both the high-temperature conditions and the low-temperature conditions as long as the high temperatures and the low temperatures are in the operating temperature range of the bearing assembly. The thickness of the buffer layer 48 is not particularly limited in the invention. However, if the buffer layer 48 is too thick, the buffer layer 48 is elastically deformed so that a predetermined fitting engaging force cannot be attained. On the other hand, if the buffer layer 48 is too thin, the buffer layer is unable to accommodate the elongation difference between the metal ring 47 and the cover 45.

While the embodiment of FIG. 5 illustrates the constitution wherein the cover 45 is fitted in the inner periphery of the outer ring member 43, an alternative constitution may be made wherein the cover 45 is fitted on an outer periphery of the outer ring member 43. In this case, the metal ring 47 is affixed to an inner periphery of the cover 45 and the buffer layer 48 of the rubber material is interposed between the metal ring 47 and the cover 45.

While the foregoing embodiments illustrate the constitution wherein the cover is fitted in the outer ring member, the invention is not limited to this. The invention is also applicable to a bearing assembly wherein the cover is fitted with the inner ring member. While the illustrated cover is equipped with the sensor, the cover may be free of the sensor.

## Claims

1. A vehicular-wheel bearing assembly comprising:
an inner ring member; an outer ring member disposed on an outer periphery of the inner ring member via a rolling element; and a synthetic-resin cover in fitting engagement with one axial end of the inner ring member or the outer ring member,
wherein the cover has a metal ring at least partially embedded in a portion of the cover, the portion making fitting engagement with the one axial end of the inner ring member or the outer ring member.

2. The vehicular-wheel bearing assembly according to Claim 1,
wherein the cover is fitted in an inner periphery of the one axial end of the inner ring member or the outer ring member, wherein the ring is partially projected from an opening end of the cover and is bent at a distal end thereof to define a hook, and wherein a recess allowing the hook to be locked therein is formed in the inner periphery of the one axial end of the inner ring member of the outer ring member.

3. A vehicular-wheel bearing assembly comprising:
an inner ring member; an outer ring member disposed on an outer periphery of the inner ring member via a rolling element; and a synthetic-resin cover fitted on an outer periphery of one axial end of the inner ring member or the outer ring member,
wherein an opening end of the cover is formed with a tapered surface progressively decreased in diameter toward a tip of the cover, and wherein a tapered surface capable of making tight contact with the tapered surface of the cover is formed on the outer periphery of the one axial end, on which the cover is fitted, of the inner ring member or the outer ring member.

4. The vehicular-wheel bearing assembly according to Claim 3,
wherein an inside projection fitted in an inner periphery of the one axial end of the inner ring member or the outer ring member is extended from the cover at place radially inwardly of a portion of the cover fitted on the outer periphery of the one axial end of the inner ring member or the outer ring member, and
wherein the inner periphery of the one axial end of the inner ring member or the outer ring member is formed with a recess allowing a hook to be locked therein,
the hook being formed at a distal end of the inside projection.

5. A vehicular-wheel bearing assembly comprising:
an inner ring member; an outer ring member disposed on an outer periphery of the inner ring member via a rolling element; and a synthetic-resin cover fitted in an inner periphery of one axial end of the inner ring member or the outer ring member,
wherein the cover has a metal ring affixed to an outer periphery of a portion of the cover fitted in the one axial end of the inner ring member or the outer ring member, and wherein a buffer layer formed from a rubber material is interposed between the metal ring and the cover.

6. A vehicular-wheel bearing assembly comprising:
an inner ring member; an outer ring member disposed on an outer periphery of the inner ring member via a rolling element; and a synthetic-resin cover fitted on an outer periphery of one axial end of the inner ring member or the outer ring member,
wherein the cover has a metal ring affixed to an inner periphery of a portion of the cover fitted on the one axial end of the inner ring member or the outer ring member, and wherein a buffer layer formed from a rubber material is interposed between the metal ring and the cover.
